# FASCICULE DE BREVET EUROPEEN

(11) **EP 2 033 021 B1**
(45) Date de publication et mention de la délivrance du brevet: **26.08.2015**
(21) Numéro de dépôt: 07803952.6
(22) Date de dépôt: 26.06.2007
(51) Int. Cl.: G02B 1/11

(54) **ARTICLE D'OPTIQUE REVETU D'UNE SOUS-COUCHE ET D'UN REVETEMENT ANTI-REFLETS MULTICOUCHES RESISTANT A LA TEMPERATURE, ET PROCEDE DE FABRICATION**
MIT EINER UNTERSCHICHT UND EINER TEMPERATURFESTEN MEHRSCHICHTIGEN ANTIREFLEXIONSBESCHICHTUNG BESCHICHTETER OPTISCHER ARTIKEL UND HERSTELLUNGSVERFAHREN DAFÜR
OPTICAL ARTICLE COATED WITH AN UNDERLAYER AND WITH A TEMPERATURE-RESISTANT MULTI-LAYER ANTI-REFLECTION COATING, AND MANUFACTURING METHOD

(30) Priorité: 28.06.2006 FR 0652690
(43) Date de publication de la demande: 11.03.2009
(73) Titulaire: ESSILOR INTERNATIONAL (Compagnie Générale d'Optique), 94220 Charenton le Pont (FR)
(72) Inventeur: BEINAT, Olivier, 94220 Charenton Le Pont (FR); SIRJEAN, Jean-Louis, 94220 Charenton Le Pont (FR); THOMAS, Michèle, 94220 Charenton Le Pont (FR)
(74) Mandataire: Catherine, Alain
(86) Numéro de dépôt international: PCT/FR2007/051537
(87) Numéro de publication internationale: WO 2008/001011

(56) Documents cités:
- WO-A-01/55752
- WO-A-96/41215
- WO-A-2005/059603
- JP-A- 5 011 101
- JP-A- 5 034 502
- US-A1- 2002 060 848
- US-A1- 2005 219 724

## Description

La présente invention concerne, de manière générale, un article d'optique comprenant un substrat revêtu d'un revêtement anti-reflets multicouches, possédant une résistance accrue vis-à-vis de la température et une bonne résistance à l'abrasion, en particulier une lentille ophtalmique pour lunettes, ainsi qu'un procédé de fabrication d'un tel article.

Dans le domaine de l'optique ophtalmique, il est classique de revêtir une lentille ophtalmique de divers revêtements afin de conférer à cette lentille diverses propriétés mécaniques et/ou optiques. Ainsi, classiquement, on forme sur une lentille ophtalmique successivement des revêtements tels que des revêtements anti-chocs, anti-abrasion et/ou anti-reflets.

Un revêtement anti-reflets se définit comme un revêtement, déposé à la surface d'un article d'optique, qui améliore les propriétés anti-réfléchissantes de l'article d'optique final. Il permet de réduire la réflexion de la lumière à l'interface article-air sur une portion relativement large du spectre visible.

Les revêtements anti-reflets sont bien connus et comprennent classiquement un empilement monocouche ou multicouches de matériaux diélectriques tels que SiO, SiO₂, Al₂O₃, MgF₂, LiF, Si₃N₄, TiO₂, ZrO₂, Nb₂O₅, Y₂O₃, HfO₂, Sc₂O₃, Ta₂O₅, Pr₂O₃, ou leurs mélanges.

Comme cela est bien connu également, les revêtements anti-reflets sont, de préférence, des revêtements multicouches comprenant alternativement des couches de haut indice de réfraction et des couches de bas indice de réfraction.

Il est connu d'interposer une sous-couche entre le substrat et le revêtement anti-reflets dans le but d'améliorer la résistance à l'abrasion et/ou aux rayures dudit revêtement.

D'une manière générale, les revêtements anti-reflets classiques présentent une bonne tenue à la température jusqu'à des températures de l'ordre de 70 °C. Lorsque la température dépasse cette valeur, des craquelures peuvent apparaître au niveau de l'empilement anti-reflets, notamment à la surface du substrat de l'article, ce qui traduit une dégradation du revêtement anti-reflets. Dans la présente demande, la température critique d'un article ou d'un revêtement est définie comme étant celle à partir de laquelle on observe l'apparition de craquelures.

Dans le cas de substrats en verre organique (résine synthétique), les dépôts de l'éventuelle sous-couche et du revêtement anti-reflets doivent être effectués par des procédés fonctionnant à des températures modérées afin d'éviter la dégradation du substrat, une précaution qui est inutile dans le cas des substrats en verre minéral.

Il en découle, dans le cas de substrats en verre organique, une moins bonne durabilité du revêtement anti-reflets, notamment une moins bonne adhésion de ce revêtement au substrat, et de moins bonnes propriétés de résistance thermique.

De plus, les substrats en verre organique ayant un coefficient d'expansion thermique plus élevé que les substrats en verre minéral ou que les matériaux inorganiques constituant les sous-couches ou les couches d'un revêtement anti-reflets, ils conduisent à des articles pouvant développer des contraintes élevées, à l'origine de l'apparition de craquelures.

Certains brevets décrivent le remplacement, dans une ou plusieurs couches de bas indice de réfraction d'un empilement anti-reflets, de la silice, le matériau le plus classique, par d'autres matériaux tels que de la silice dopée par de l'alumine, dans le but d'obtenir de meilleures propriétés.

La demande de brevet US 2005/0219724 décrit un article d'optique revêtu d'un film diélectrique multicouches tel qu'un revêtement anti-reflets, composé d'une alternance de couches de haut indice de réfraction (TiO₂) et de couches de bas indice de réfraction. Toutes les couches de bas indice sont à base de SiO₂ additionné d'une faible quantité d'Al₂O₃ de sorte que leur indice de réfraction (noté n) vaille 1,47.

Ce document recommande de ne pas utiliser de couches de bas indice de réfraction exclusivement composées de SiO₂ (n = 1,46), car de telles couches conduisent à des films qui développent des contraintes en compression intenses, si bien qu'il n'est pas possible d'obtenir un film durable et ayant une bonne adhérence au substrat. L'utilisation d'un mélange SiO**₂** / Al₂O₃ permet de réduire les contraintes dans les couches bas indice, et par là la probabilité d'apparition de craquelures à la surface du substrat.

Le brevet russe SU 1176280 décrit un substrat revêtu d'un empilement de cinq couches alternativement de haut indice de réfraction (ZrO₂, n = 1,95-2,05) et de bas indice de réfraction (SiO₂ dopée par 3 % d'Al₂O₃, n = 1,45-1,47).

La demande de brevet WO 2005/059603, au nom du déposant, décrit un article comprenant un revêtement anti-reflets multicouches coloré comprenant au moins deux couches de haut indice de réfraction absorbant dans le visible à base d'oxyde de titane sous-stoechiométrique TiOₓ (x < 2) et de préférence au moins une couche de bas indice de réfraction (BI) à base de SiO₂ dopée par 1-5 % en masse d'Al₂O₃, par rapport à la masse totale SiO₂ + Al₂O₃. Une telle couche BI améliore la durée de vie du revêtement et l'homogénéité de la coloration. Le facteur relatif de transmission dans le visible (Tv) de l'article est d'au plus 40 % et de façon optimale de l'ordre de 15 %.

Ce document décrit plus particulièrement un substrat revêtu successivement d'une sous-couche de silice de 100-110 nm d'épaisseur (ayant un rôle anti-rayures), d'une couche de TiOₓ, d'une couche de SiO₂/Al₂O₃, d'une couche de TiOₓ, d'une couche de SiO₂/Al₂O₃, d'une couche de TiOₓ, d'une couche de SiO₂/Al₂O₃ et d'un revêtement anti-salissures. Le problème de l'obtention d'un article thermiquement résistant n'y est pas envisagé.

Le brevet japonais H05-011101 décrit la préparation d'articles d'optique ayant initialement une bonne résistance thermique et dont les propriétés de résistance à la chaleur, qui chutent inévitablement avec le temps, se maintiennent à un niveau élevé au bout de plusieurs mois. Ces deux caractéristiques sont obtenues grâce à l'utilisation d'une sous-couche de SiO₂/Al₂O₃ d'indice de réfraction n = 1,48-1,52.

L'article d'optique décrit dans ce brevet comprend donc un substrat revêtu de ladite sous-couche (d'épaisseur 0,125 λ - 0,8 λ, avec λ = 500 nm) et d'un empilement anti-reflets comprenant une couche de haut indice de réfraction intercalée entre deux couches de bas indice de réfraction. La couche de bas indice de réfraction la plus éloignée du substrat est toujours une couche de SiO₂ d'épaisseur élevée (0,25 λ). La sous-couche permet d'améliorer la température critique d'apparition de craquelures à la surface du substrat, qui est de l'ordre de 100-105 °C au stade initial.

Le brevet japonais H05-034502 présente une variante de l'invention décrite ci-dessus, dans laquelle la sous-couche de SiO₂/Al₂O₃ d'indice de réfraction n = 1,48-1,52 est remplacée par une sous-couche laminée comprenant les trois couches suivantes : une couche de SiO₂ de faible épaisseur (0,05 λ - 0,15 λ) et d'indice de réfraction n = 1,45-1,47, une couche de Ta₂O₅ de très faible épaisseur (0,01 λ - 0,10 λ) et d'indice de réfraction n = 2-2,1, et une couche de SiO₂/Al₂O₃ d'indice de réfraction n = 1,48-1,52 plus épaisse que celle décrite dans le brevet H05-011101 (0,75 λ - 1,50 λ), ces trois couches étant déposées sur le substrat dans l'ordre dans lequel elles ont été citées. La température critique d'apparition de craquelures à la surface du substrat, mentionnée dans le brevet H05-034502, est de l'ordre de 95-120 °C au stade initial grâce à cette sous-couche comprenant essentiellement une couche de SiO₂/Al₂O₃. Par ailleurs, toutes les couches de bas indice de réfraction de l'empilement anti-reflets ne sont pas à base de SiO₂/Al₂O₃.

Il est cependant préférable d'éviter la préparation d'une telle sous-couche laminée, qui augmente le nombre d'opérations de dépôt.

La présente invention a donc pour objectif de fournir un article d'optique transparent, notamment une lentille ophtalmique, comprenant un substrat en verre minéral ou organique, une sous-couche et un empilement anti-reflets qui remédie aux inconvénients de l'art antérieur tout en conservant d'excellentes propriétés de transparence, d'absence de défauts optiques, et une aptitude à supporter des variations de température.

Les articles d'optique selon l'invention présentent également une excellente résistance à la photo-dégradation sous un rayonnement lumineux, en particulier UV. Ils présentent également une bonne résistance à un traitement au trempé dans l'eau chaude suivi d'une sollicitation mécanique de surface.

Un autre objectif de l'invention est l'obtention d'un article d'optique doté de propriétés antistatiques et d'une bonne résistance à l'abrasion.

La présente invention a encore pour but un procédé de fabrication d'un article tel que défini ci-dessus qui s'intègre aisément dans le processus classique de fabrication et qui évite un chauffage du substrat.

La présente invention a été conçue pour résoudre le problème de la tenue en température des revêtements anti-reflets. Elle est basée sur une double sélection portant d'une part sur la nature de la sous-couche et d'autre part sur les couches de bas indice de réfraction de l'empilement anti-reflets, et permet d'obtenir un article d'optique à propriétés anti-reflets ayant à la fois une résistance thermique et une résistance à l'abrasion accrues. Elle repose également sur un choix du positionnement des différentes couches.

Les buts fixés sont atteints selon l'invention par un article d'optique à propriétés anti-reflets comprenant un substrat et, en partant du substrat :
- une sous-couche comprenant une couche à base de SiO₂, ladite couche à base de SiO₂ ayant une épaisseur supérieure ou égale à 75 nm et étant exempte d'Al₂O₃; et
- un revêtement anti-reflets multicouches comprenant un empilement d'au moins une couche de haut indice de réfraction et d'au moins une couche de bas indice de réfraction, dont toutes les couches de bas indice de réfraction comprennent un mélange de SiO₂ et d'Al₂O₃ et dont les couches de haut indice de réfraction ne sont pas des couches absorbant dans le visible comprenant un oxyde de titane sous-stoechiométrique et réduisant le facteur de transmission dans le visible (τ_{V}, ci après désigné par Tv), encore nommé facteur relatif de transmission dans le visible, de l'article d'optique d'au moins 10 % par rapport au même article ne comportant pas lesdites couches absorbant dans le visible.

Le facteur Tv répond à une définition internationale normalisée (norme ISO 13666:1998) et est mesuré conformément à la norme ISO 8980-3). Il est défini dans la gamme de longueur d'onde allant de 380 à 780 nm.

Les couches de haut indice de réfraction peuvent contenir un oxyde de titane sous-stoechiométrique, de formule TiOₓ, avec x < 2, pourvu qu'elles ne réduisent pas le facteur relatif de transmission dans le visible (Tv) de l'article d'optique de l'invention d'au moins 10 % par rapport au même article ne comportant pas lesdites couches absorbant dans le visible. Il faut en effet préciser que l'oxyde de titane, généralement représenté par la formule TiO₂, est en réalité légèrement sous-stoechiométrique.

Selon un mode de réalisation particulier de l'invention, l'article d'optique de l'invention n'absorbe pas dans le visible ou absorbe peu dans le visible, ce qui signifie, au sens de la présente demande, que son facteur relatif de transmission dans le visible (Tv) est supérieur à 90 %, mieux supérieur à 95 %, mieux encore supérieur à 96 % et de façon optimale supérieure à 97 %.

Selon d'autres modes de réalisation, les couches de haut indice de réfraction du revêtement anti-reflets n'absorbent pas dans le visible ; les couches de haut indice de réfraction du revêtement anti-reflets ne comprennent pas d'oxyde de titane sous-stoechiométrique de formule TiOₓ tel que x ≤ 1,5, de préférence x ≤ 1,7 et mieux x ≤ 1,9.

De préférence, l'absorption lumineuse de l'article revêtu selon l'invention est inférieure ou égale à 1 %.

De préférence, le facteur moyen de réflexion dans le domaine visible (400-700 nm) d'un article revêtu selon l'invention, noté Rₘ, est inférieur à 2,5 % par face, mieux inférieur à 2 % par face et encore mieux inférieur à 1 % par face de l'article. Dans un mode de réalisation optimal, l'article présente une valeur de Rₘ totale (cumul de réflexion due aux deux faces) inférieure à 1%, de préférence comprise entre 0,7 et 0,8%.

Dans la présente demande, le "facteur moyen de réflexion" est tel que défini dans la norme ISO 13666:1998, et mesuré conformément à la norme ISO 8980-4, c'est-à-dire qu'il s'agit de la moyenne de la réflexion spectrale sur l'ensemble du spectre visible entre 400 et 700 nm.

Selon l'invention, l'article d'optique comprend un substrat, de préférence transparent, en verre organique ou minéral, ayant des faces principales avant et arrière, l'une au moins desdites faces principales comportant une sous-couche revêtue d'un revêtement anti-reflets multicouches.

Dans la présente invention, une sous-couche à base de SiO₂ exempte d'Al₂O₃ est utilisée en combinaison avec des couches de bas indice de réfraction à base de SiO₂/Al₂O₃. Les présents inventeurs ont constaté qu'il n'était pas souhaitable d'utiliser une sous-couche à base de SiO₂/Al₂O₃, comme enseigné dans les brevets japonais H05-011101 et H05-034502, en combinaison avec l'empilement anti-reflets de la présente invention. Sans vouloir être lié par une quelconque théorie, on peut penser qu'une telle sous-couche induit des contraintes en compression trop importantes, ces contraintes pouvant alors entraîner une délamination et une diminution de la résistance à l'abrasion de l'article.

Par sous-couche, ou couche d'adhésion, on entend un revêtement qui est déposé sur le substrat (nu ou revêtu) avant le dépôt de l'empilement anti-reflets. La sous-couche doit avoir une épaisseur suffisante pour promouvoir la résistance à l'abrasion du revêtement anti-reflets, mais de préférence pas trop importante pour ne pas provoquer une absorption lumineuse qui réduirait significativement le facteur relatif de transmission Tv.

Compte tenu de son épaisseur relativement importante, la sous-couche ne participe pas à l'activité optique anti-réfléchissante. Elle ne fait pas partie de l'empilement anti-reflets et n'a aucun effet optique significatif.

La sous-couche comprend une couche à base de SiO₂ exempte d'Al₂O₃ et d'épaisseur supérieure ou égale à 75 nm, de préférence supérieure ou égale à 80 nm, mieux supérieure ou égale à 100 nm et encore mieux supérieure ou égale à 120 nm. Son épaisseur est généralement inférieure à 250 nm, mieux inférieure à 200 nm.

La sous-couche peut être laminée, c'est-à-dire comprendre d'autres couches que la couche à base de SiO₂ d'épaisseur supérieure ou égale à 75 nm et exempte d'Al₂O₃.

La sous-couche comprend préférentiellement une couche de SiO₂ d'épaisseur supérieure ou égale 75 nm et exempte d'Al₂O₃ et au plus trois couches, de préférence au plus deux couches, intercalées entre le substrat, éventuellement revêtu, et cette couche de SiO₂ exempte d'Al₂O₃.

En particulier, lorsque le substrat possède un indice de réfraction élevé (supérieur ou égal à 1,55, de préférence supérieur ou égal à 1,57) et que la sous-couche est déposée directement sur le substrat ou que le substrat est revêtu d'un revêtement anti-abrasion d'indice de réfraction élevé (supérieur ou égal à 1,55, de préférence supérieur ou égal à 1,57), préférentiellement à base d'époxysilanes, et que la sous-couche est déposée directement sur le revêtement anti-abrasion, la sous-couche comprend préférentiellement, outre la couche de SiO₂ précitée, une couche d'indice de réfraction élevé et de faible épaisseur, inférieure ou égale à 80 nm, mieux inférieure ou égale à 50 nm et mieux encore inférieure ou égale à 30 nm.

Cette couche d'indice de réfraction élevé est directement en contact avec le substrat d'indice élevé ou le revêtement anti-abrasion d'indice élevé.

En alternative, la sous-couche comprend, outre la couche de SiO₂ précitée et la couche d'indice de réfraction élevé précitée, une couche de matériau de bas indice de réfraction à base de SiO₂, exempte ou non d'Al₂O₃ sur laquelle est déposée la couche d'indice de réfraction élevé.

Typiquement, dans ce cas, la sous-couche comprend, déposées dans cet ordre à partir du substrat, une couche de 25 nm de SiO₂, une couche de 10 nm de ZrO₂, une couche de 160 nm de SiO₂.

On préfère utiliser une sous-couche de type monocouche.

Ladite couche à base de SiO₂ d'épaisseur supérieure ou égale à 75 nm peut comprendre, en plus de la silice, un ou plusieurs autres matériaux conventionnellement utilisés pour la fabrication de sous-couches, par exemple un ou plusieurs matériaux choisis parmi les matériaux diélectriques décrits précédemment dans la présente description, à l'exception de l'alumine.

La sous-couche de la présente invention comprend de préférence au moins 70 % en masse de SiO₂, mieux 80 % en masse et mieux encore 90 % en masse. Dans une réalisation optimale, ladite couche comprend 100 % en masse de silice.

Dans la présente demande, une couche d'un empilement anti-reflets est dite couche de haut indice de réfraction lorsque son indice de réfraction est supérieur ou égal à 1,6, de préférence supérieur ou égal à 1,7, mieux supérieur ou égal à 1,8 et encore mieux supérieur ou égal à 1,9. Une couche d'un empilement anti-reflets est dite couche de bas indice de réfraction lorsque son indice de réfraction est inférieur ou égal à 1,54, de préférence inférieur ou égal à 1,52, mieux inférieur ou égal à 1,50.

Sauf indication contraire, les indices de réfraction auxquels il est fait référence dans la présente invention sont exprimés à 25 °C pour une longueur d'onde de 550 nm.

Les couches BI du revêtement anti-reflets comprennent toutes un mélange de SiO₂ et d'Al₂O₃. Dans le reste de la description, elles seront généralement notées couches SiO₂/Al₂O₃.

Elles peuvent comprendre, en plus de la silice et de l'alumine, un ou plusieurs autres matériaux conventionnellement utilisés pour la fabrication d'une couche anti-reflets, par exemple un ou plusieurs matériaux choisis parmi les matériaux diélectriques décrits précédemment dans la présente description.

De préférence, les couches BI du revêtement anti-reflets consistent cependant toutes en un mélange de SiO₂ et d'Al₂O₃. Elles comprennent préférentiellement de 1 à 10 %, préférentiellement de 1 à 5 % en masse d'Al₂O₃ par rapport à la masse totale de SiO₂ + Al₂O₃ dans ces couches. Une proportion d'alumine trop importante est défavorable aux performances du revêtement anti-reflets.

Des mélanges SiO₂/Al₂O₃ disponibles dans le commerce peuvent être employés, tels que le LIMA^{®} commercialisé par Umicore Materials AG (indice de réfraction n = 1,48-1,50 à 550 nm), ou la substance L5^{®} commercialisée par Merck KGaA (indice de réfraction n = 1,48 à 500 nm).

Les couches de bas indice de réfraction (BI) à base d'un mélange d'oxyde de silicium et d'oxyde d'aluminium présentent essentiellement deux effets par rapport à des couches BI à base d'oxyde de silicium. D'une part, elles permettent d'améliorer la durée de vie du revêtement anti-reflets, sa résistance aux dégradations extérieures, en particulier aux UV, et, d'autre part, elles permettent d'augmenter la température d'apparition des craquelures du film mince, autrement dit, la température critique du revêtement.

La température critique d'un article revêtu selon l'invention est de préférence supérieure ou égale à 80 °C, mieux supérieure ou égale à 85 °C et encore mieux supérieure ou égale à 90 °C.

Sans vouloir donner d'interprétation limitative à l'invention, les inventeurs pensent que la substitution de la silice pure par de la silice dopée par de l'alumine, toutes choses étant strictement égales par ailleurs, permet d'augmenter la contrainte en compression de l'ensemble de l'empilement, ce qui améliore la température critique de l'article. Ceci est contraire à l'enseignement de la demande de brevet US 2005/0219724, qui indique qu'une couche de SiO₂/Al₂O₃ induit des contraintes plus faibles qu'une couche de SiO₂.

D'un autre côté, une contrainte en compression trop élevée peut entraîner des problèmes d'adhérence et une diminution de la résistance à l'abrasion, ce qui apparaîtra clairement à la lecture des exemples.

Les couches HI sont des couches d'indice de réfraction élevé classiques, bien connues dans la technique. Elles comprennent généralement un ou plusieurs oxydes minéraux tels que, sans limitation, la zircone (ZrO₂), l'oxyde de titane (TiO₂), le pentoxyde de tantale (Ta₂O₅), l'oxyde de néodyme (Nd₂O₅), l'oxyde de praséodyme (Pr₂O₃), le titanate de praséodyme (PrTiO₃), La₂O₃, Dy₂O₅, Nb₂O₅, Y₂O₃. Eventuellement, les couches haut indice peuvent contenir également de la silice ou de l'alumine, pourvu que leur indice de réfraction soit supérieur ou égal à 1,6, de préférence supérieur ou égal à 1,7, mieux supérieur ou égal à 1,8. Les matériaux préférés sont TiO₂, PrTiO₃, ZrO₂ et leurs mélanges.

Selon un mode de réalisation particulier de l'invention, au moins une couche HI de l'empilement anti-reflets est une couche à base de TiO₂, dont l'indice de réfraction élevé est particulièrement intéressant. Elle est de préférence déposée sous assistance ionique (IAD), ce qui augmente la compression de cette couche et par là son indice de réfraction.

Selon un autre mode de réalisation particulier de l'invention, au moins une couche HI de l'empilement anti-reflets est une couche à base de PrTiO₃, dont la résistance thermique élevée est particulièrement intéressante.

Généralement, les couches HI ont une épaisseur physique variant de 10 à 120 nm, et les couches BI ont une épaisseur physique variant de 10 à 100 nm.

Préférentiellement, l'épaisseur physique totale du revêtement anti-reflets est inférieure à 1 micromètre, mieux inférieure ou égale à 500 nm et mieux encore inférieure ou égale à 250 nm. L'épaisseur physique totale du revêtement anti-reflets est généralement supérieure à 100 nm, de préférence supérieure à 150 nm. Les épaisseurs mentionnées dans la présente demande sont des épaisseurs physiques, sauf indication contraire.

De préférence, le revêtement anti-reflets multicouches est directement en contact avec la sous-couche.

De préférence encore, le revêtement anti-reflets multicouches est formé d'un empilement comprenant au moins deux couches de bas indice de réfraction (BI) et au moins deux couches de haut indice de réfraction (HI). Préférentiellement, le nombre total de couches du revêtement anti-reflets est inférieur ou égal à 6.

Il n'est pas nécessaire que les couches HI et BI soient alternées dans l'empilement, bien qu'elles puissent l'être selon un mode de réalisation de l'invention. Deux couches HI (ou plus) peuvent être déposées l'une sur l'autre, tout comme deux couches BI (ou plus) peuvent être déposées l'une sur l'autre. Ainsi, il est intéressant en termes de résistance à l'abrasion d'empiler l'une sur l'autre par exemple une couche HI de ZrO₂ et une couche HI de TiO₂ plutôt que d'utiliser une couche de TiO₂ à la place de ces deux couche HI adjacentes.

De préférence, la couche à base de SiO₂ de la sous-couche est adjacente à une couche de haut indice de réfraction (HI) de l'empilement anti-reflets. De préférence encore, la première couche BI comprenant un mélange d'oxyde silicium et d'oxyde d'aluminium dans l'ordre d'empilement est déposée sur une couche HI et revêtue d'une autre couche HI, de nature chimique identique ou différente.

Selon une autre préférence, la couche externe du revêtement anti-reflets multicouches, c'est-à-dire sa couche la plus éloignée du substrat, est une couche comprenant un mélange d'oxyde silicium et d'oxyde d'aluminium.

Il est bien connu que les articles d'optique ont tendance à se charger en électricité statique, particulièrement lorsqu'ils sont nettoyés en conditions sèches par frottement de leur surface au moyen d'un chiffon, d'un morceau de mousse synthétique ou de polyester. Ils sont alors capables d'attirer et de fixer les petites particules se trouvant à proximité telles que les poussières, et ce durant tout le temps où la charge reste sur l'article. Il est bien connu dans l'état de la technique qu'un article peut acquérir des propriétés antistatiques grâce à la présence à sa surface d'une couche électriquement conductrice. Cette technique a été appliquée dans la demande internationale WO 01/55752 et le brevet EP 0834092. Cette couche permet une dissipation rapide de la charge.

Par "antistatique", on entend la propriété de ne pas retenir et/ou développer une charge électrostatique appréciable. Un article est généralement considéré comme ayant des propriétés antistatiques acceptables, lorsqu'il n'attire et ne fixe pas la poussière et les petites particules après que l'une de ses surfaces a été frottée au moyen d'un chiffon approprié.

Il existe différentes techniques pour quantifier les propriétés antistatiques d'un matériau.

Une de ces techniques consiste à prendre en compte le potentiel statique du matériau. Lorsque le potentiel statique du matériau (mesuré alors que l'article n'a pas été chargé) est de 0 KV +/- 0,1 KV (en valeur absolue), le matériau est antistatique, en revanche lorsque son potentiel statique est différent de 0 KV +/- 0,1 KV (en valeur absolue), le matériau est dit statique.

Selon une autre technique, la capacité d'un verre à évacuer une charge statique obtenue après frottement par un tissu ou par tout autre procédé de génération d'une charge électrostatique (charge appliquée par corona...) peut être quantifiée par une mesure du temps de dissipation de ladite charge. Ainsi, les verres antistatiques possèdent un temps de décharge de l'ordre de la centaine de millisecondes, alors qu'il est de l'ordre de plusieurs dizaines de secondes pour un verre statique.

L'article de l'invention peut être rendu antistatique grâce à l'incorporation d'au moins une couche électriquement conductrice dans l'empilement anti-reflets. La couche électriquement conductrice peut être localisée à différents endroits du revêtement anti-reflets, pourvu que ses propriétés anti-réfléchissantes ne soient pas perturbées. Elle peut par exemple être déposée sur la sous-couche de l'invention et constituer la première couche du revêtement anti-reflets. Elle est de préférence localisée sous une couche de bas indice de réfraction.

La couche électriquement conductrice doit être suffisamment fine pour ne pas altérer la transparence du revêtement anti-reflets. Généralement, son épaisseur varie de 0,1 à 150 nm, mieux de 0,1 à 50 nm, selon sa nature. Une épaisseur inférieure à 0,1 nm ne permet généralement pas d'obtenir une conductivité électrique suffisante, alors qu'une épaisseur supérieure à 150 nm ne permet généralement pas d'obtenir les caractéristiques de transparence et de faible absorption requises.

La couche électriquement conductrice est de préférence fabriquée à partir d'un matériau électriquement conducteur et hautement transparent. Dans ce cas, son épaisseur varie de préférence de 0,1 à 30 nm, mieux de 1 à 20 nm et encore mieux de 1 à 10 nm. Ledit matériau est de préférence un oxyde métallique choisi parmi les oxydes d'indium, d'étain, de zinc et leurs mélanges. L'oxyde d'étain-indium (In₂O₃:Sn, oxyde d'indium dopé à l'étain) et l'oxyde d'étain (In₂O₃) sont préférés. Selon un mode de réalisation optimal, la couche électriquement conductrice et optiquement transparente est une couche d'oxyde d'étain-indium, notée couche ITO.

Généralement, la couche électriquement conductrice contribue à l'obtention de propriétés anti-réfléchissantes et constitue une couche de haut indice de réfraction dans le revêtement anti-reflets. C'est le cas de couches fabriquées à partir d'un matériau électriquement conducteur et hautement transparent telles que les couches ITO.

La couche électriquement conductrice peut également être une couche d'un métal noble de très faible épaisseur, typiquement de moins de 1 nm d'épaisseur, mieux de moins de 0,5 nm.

De manière particulièrement avantageuse, l'empilement anti-reflets comprend cinq couches diélectriques et éventuellement une couche électriquement conductrice qui confère des propriétés antistatiques à l'article.

Selon un mode de réalisation préféré, sont déposées successivement, depuis la surface du substrat, une sous-couche de SiO₂ d'épaisseur supérieure ou égale à 75 nm, une couche de ZrO₂, généralement de 10 à 40 nm d'épaisseur et préférentiellement de 15 à 35 nm, une couche de SiO₂/Al₂O₃, généralement de 10 à 40 nm d'épaisseur et préférentiellement de 15 à 35 nm, une couche de TiO₂, généralement de 40 à 150 nm d'épaisseur et préférentiellement de 50 à 120 nm, une couche de ZrO₂, généralement de 10 à 30 nm d'épaisseur et préférentiellement de 10 à 25 nm, éventuellement une couche électriquement conductrice, de préférence une couche ITO, généralement de 0,1 à 30 nm d'épaisseur et préférentiellement de 1 à 20 nm, et une couche de SiO₂/Al₂O₃, généralement de 40 à 150 nm d'épaisseur et préférentiellement de 50 à 100 nm. Il est préférable que l'empilement anti-reflets de l'invention comprenne une couche électriquement conductrice. Mieux, l'article de l'invention comprend un empilement TiO₂ / ZrO₂ / couche électriquement conductrice.

Selon un mode de réalisation particulièrement préféré, sont déposées successivement, depuis la surface du substrat, une sous-couche de SiO₂ d'épaisseur supérieure ou égale à 120 nm, une couche de ZrO₂ de 20 à 30 nm d'épaisseur, une couche de SiO₂/Al₂O₃ de 20 à 30 nm d'épaisseur, une couche de TiO₂ de 75 à 105 nm d'épaisseur, une couche de ZrO₂ de 10 à 20 nm d'épaisseur, une couche ITO de 2 à 20 nm d'épaisseur, et une couche de SiO₂/Al₂O₃ de 60 à 90 nm d'épaisseur.

Les trois couches successives TiO₂ / ZrO₂ / couche électriquement conductrice (de préférence ITO) sont de préférence déposées sous assistance ionique (IAD).

Un tel article possède une très bonne résistance à l'abrasion, mesurée par le test BAYER.

De manière générale, la sous-couche et le revêtement anti-reflets de l'article d'optique selon l'invention peuvent être déposés sur tout substrat, de préférence transparent, en verre organique ou minéral, et de préférence sur des substrats en verre organique, par exemple une matière plastique thermoplastique ou thermodurcissable.

Parmi les matériaux thermoplastiques convenant pour les substrats, on peut citer les (co)polymères (méth)acryliques, en particulier le poly(méthacrylate de méthyle) (PMMA), les (co)polymères thio(méth)acryliques, le polyvinylbutyral (PVB), les polycarbonates (PC), les polyuréthanes (PU), les poly(thiouréthanes), les (co)polymères d'allylcarbonates de polyols, les copolymères thermoplastiques éthylène/acétate de vinyle, les polyesters tels que le poly(téréphtalate d'éthylène) (PET) ou le poly(téréphtalate de butylène) (PBT), les polyépisulfures, les polyépoxydes, les copolymères polycarbonates/polyesters, les copolymères de cyclooléfines tels que les copolymères éthylène/norbornène ou éthylène/cyclopentadiène et leurs combinaisons.

Par (co)polymère, on entend un copolymère ou un polymère. Par (méth)acrylate, on entend un acrylate ou un méthacrylate.

Parmi les substrats préférés selon l'invention, on peut citer des substrats obtenus par polymérisation des (métha)crylates d'alkyle, en particulier des (méth)acrylates d'alkyle en C₁-C₄, tels que le (méth)acrylate de méthyle et le (méth)acrylate d'éthyle, des (méth)acrylates aromatiques polyéthoxylés tels que les di(méth)acrylates de bisphénols polyéthoxylés, des dérivés allyles tels que les allylcarbonates de polyols aliphatiques ou aromatiques, linéaires ou ramifiés, des thio(méth)acrylates, des épisulfures et de mélanges précurseurs polythiols/polyisocyanates (pour l'obtention de polythiouréthanes).

Par polycarbonate (PC), on entend au sens de la présente invention aussi bien les homopolycarbonates que les copolycarbonates et les copolycarbonates séquencés. Les polycarbonates sont disponibles dans le commerce, par exemple auprès des sociétés GENERAL ELECTRIC COMPANY sous la marque LEXAN^{®}, TEIJIN sous la marque PANLITE^{®}, BAYER sous la marque BAYBLEND^{®}, MOBAY CHEMICHAL Corp. sous la marque MAKROLON^{®} et DOW CHEMICAL Co. sous la marque CALIBRE^{®}.

Comme exemples de (co)polymères d'allyl carbonates de polyols, on peut citer les (co)polymères d'éthylèneglycol bis (allyl carbonate), de diéthylèneglycol bis 2-méthyl carbonate, de diéthylèneglycol bis (allyl carbonate), d'éthylèneglycol bis (2-chloro allyl carbonate), de triéthylèneglycol bis (allyl carbonate), de 1,3-propanediol bis (allyl carbonate), de propylèneglycol bis (2-éthyl allyl carbonate), de 1,3-butènediol bis (allyl carbonate), de 1,4-butènediol bis (2-bromo allyl carbonate), de dipropylèneglycol bis (allyl carbonate), de triméthylèneglycol bis (2-éthyl allyl carbonate), de pentaméthylèneglycol bis (allyl carbonate), d'isopropylène bisphénol A bis (allyl carbonate).

Les substrats particulièrement recommandés sont les substrats obtenus par (co)polymérisation du bis allyl carbonate du diéthylèneglycol, vendu, par exemple, sous la dénomination commerciale CR 39^{®} par la société PPG Industries (lentilles ORMA^{®} ESSILOR).

Parmi les substrats également particulièrement recommandés, on peut citer les substrats obtenus par polymérisation des monomères thio(méth)acryliques, tels que ceux décrits dans la demande de brevet français FR 2734827.

Bien évidemment, les substrats peuvent être obtenus par polymérisation de mélanges des monomères ci-dessus, ou peuvent encore comprendre des mélanges de ces polymères et (co)polymères.

Les substrats organiques préférés dans le cadre de l'invention sont ceux présentant un coefficient de dilatation thermique de 50.10⁻⁶ °C⁻¹ à 180.10⁻⁶ °C⁻¹, et préférentiellement de 100.10⁻⁶ °C⁻¹ à 180.10⁻⁶ °C⁻¹.

Selon la présente invention, la sous-couche et l'empilement anti-reflets peuvent être appliqués sur la face avant et/ou la face arrière du substrat. Ils sont de préférence appliqués sur les faces avant et arrière du substrat.

Par face arrière du substrat, on entend la face qui, lors de l'utilisation de l'article, est la plus proche de l'oeil du porteur. Inversement, par face avant du substrat, on entend la face qui, lors de l'utilisation de l'article, est la plus éloignée de l'oeil du porteur.

Avant le dépôt de la sous-couche sur le substrat éventuellement revêtu d'un revêtement anti-abrasion à base d'époxysilanes, il est courant de soumettre la surface dudit substrat éventuellement revêtue à un traitement destiné à augmenter l'adhésion de la sous-couche, qui est généralement conduit sous vide, tel qu'un bombardement avec des espèces énergétiques, par exemple un faisceau d'ions ("Ion Pre-Cleaning" ou "IPC"), un traitement par décharge corona, par effluvage ou un traitement par plasma sous vide. Grâce à ces traitements de nettoyage, la propreté de la surface du substrat est optimisée. Un traitement par bombardement ionique est préféré.

Les différentes couches du revêtement anti-reflets, dites "couches optiques", et la sous-couche sont préférentiellement déposées par dépôt sous vide selon l'une des techniques suivantes : i) par évaporation, éventuellement assistée par faisceau ionique ; ii) par pulvérisation par faisceau d'ion ; iii) par pulvérisation cathodique ; iv) par dépôt chimique en phase vapeur assistée par plasma. Ces différentes techniques sont décrites dans les ouvrages "Thin Film Processes" and "Thin Film Processes II," Vossen & Kern, Ed., Academic Press, 1978 et 1991 respectivement. Une technique particulièrement recommandée est la technique d'évaporation sous vide.

La couche électriquement conductrice, qui est généralement une couche de haut indice de réfraction de l'empilement anti-reflets, peut être déposée selon toute technique appropriée, par exemple par dépôt sous vide par évaporation, de préférence assistée par faisceau ionique (IAD), ou bien par une technique de pulvérisation cathodique ou par faisceau d'ion.

Les caractéristiques électriques et de transparence de la couche électriquement conductrice dépendent, entre autres, d'un contrôle précis de la teneur en oxygène durant le processus de revêtement, ce qui est bien connu de l'état de la technique.

Comme cela a été indiqué précédemment, il est possible de réaliser une étape de traitement avec des espèces énergétiques, notamment des ions, de façon concomitante au dépôt d'une ou plusieurs des différentes couches précitées. Les dépôts des couches du revêtement anti-reflets (dont la couche électriquement conductrice) et de la sous-couche peuvent notamment être réalisés sous assistance ionique (procédé "IAD" : Ion Assisted Deposition). Cette technique consiste à tasser lesdites couches avec des ions lourds, pendant qu'elles sont en train d'être formées, afin d'accroître leur densité. Outre une densification, elle permet d'améliorer l'adhérence des couches déposées et d'augmenter leur indice de réfraction.

Par espèces énergétiques, on entend des espèces ayant une énergie allant de 1 à 150 eV, de préférence de 10 à 150 eV, et mieux de 40 à 150 eV. Les espèces énergétiques peuvent être des espèces chimiques telles que des ions, des radicaux, ou des espèces telles que des photons ou des électrons.

Les opérations d'IAD et d'IPC peuvent être effectuées au moyen d'un canon à ions (Commonwealth de type Mark II par exemple), les ions étant des particules constituées d'atomes de gaz dont on a extrait un ou plusieurs électron(s). Elles consistent préférentiellement en un bombardement de la surface à traiter par des ions argon (Ar⁺), d'une densité de courant comprise entre 10 et 100 µA/cm² sur la surface activée et sous une pression résiduelle dans l'enceinte à vide pouvant varier de 8.10⁻⁵ mbar à 2.10⁻⁴ mbar.

La sous-couche et le revêtement anti-reflets peuvent être déposés directement sur un substrat nu. Dans certaines applications, il est préférable que la surface principale du substrat soit revêtue d'une couche anti-abrasion et/ou anti-rayures, d'une couche de primaire anti-chocs, ou d'une couche de primaire anti-chocs et d'une couche anti-abrasion et/ou anti-rayures, dans cet ordre. D'autres revêtements classiquement utilisés peuvent également être employés.

La sous-couche et le revêtement anti-reflets sont de préférence déposés sur un revêtement anti-abrasion et/ou anti-rayures. Le revêtement anti-abrasion et/ou anti-rayures peut être toute couche classiquement utilisée comme revêtement anti-abrasion et/ou anti-rayures dans le domaine des lentilles ophtalmiques.

Les revêtements résistant à l'abrasion et/ou aux rayures sont de préférence des revêtement durs à base de poly(méth)acrylates ou de silanes.

Les revêtements durs anti-abrasion et/ou anti-rayures sont de préférence élaborés à partir de compositions comprenant au moins un alcoxysilane et/ou un hydrolysat de celui-ci, obtenu par exemple par hydrolyse avec une solution d'acide chlorhydrique. Après l'étape d'hydrolyse, dont la durée est généralement comprise entre 2h et 24h, préférentiellement entre 2h et 6h, des catalyseurs peuvent optionnellement être ajoutés. Un composé tensioactif est de préférence également ajouté afin de favoriser la qualité optique du dépôt.

Parmi les revêtements recommandés dans la présente invention, on peut citer les revêtements à base d'hydrolysats d'époxysilanes tels que ceux décrits dans les brevets FR 2702486 (EP 0614957), US 4,211,823 et US 5,015,523.

Une composition pour revêtement anti-abrasion et/ou anti-rayures préférée est celle divulguée dans le brevet FR 2702486, au nom du déposant. Elle comprend un hydrolysat d'époxy trialcoxysilane et de dialkyl dialcoxysilane, de la silice colloïdale et une quantité catalytique de catalyseur de durcissement à base d'aluminium tel que l'acétylacétonate d'aluminium, le reste étant essentiellement constitué par des solvants classiquement utilisés pour la formulation de telles compositions. Préférentiellement l'hydrolysat utilisé est un hydrolysat de γ-glycidoxypropyltriméthoxysilane (GLYMO) et de diméthyldiéthoxysilane (DMDES).

La composition de revêtement anti-abrasion et/ou anti-rayures peut être déposée sur la surface principale du substrat par trempage ou centrifugation. Elle est ensuite durcie par la voie appropriée (de préférence thermique, ou UV).

L'épaisseur du revêtement anti-abrasion et/ou anti-rayures varie généralement de 2 à 10 µm, préférentiellement de 3 à 5 µm.

Préalablement au dépôt du revêtement anti-abrasion et/ou anti-rayures, il est possible de déposer sur le substrat un revêtement de primaire améliorant la résistance aux chocs et/ou l'adhésion des couches ultérieures dans le produit final.

Ce revêtement peut être toute couche de primaire anti-chocs classiquement utilisée pour les articles en matériau polymère transparent, tels que des lentilles ophtalmiques.

Parmi les compositions de primaire préférées, on peut citer les compositions à base de polyuréthanes thermoplastiques, telles que celles décrites dans les brevets japonais JP 63-141001 et JP 63-87223, les compositions de primaire poly(méth)acryliques, telles que celles décrites dans le brevet US 5,015,523, les compositions à base de polyuréthanes thermodurcissables, telles que celles décrites dans le brevet EP 0404111 et les compositions à base de latex poly(méth)acryliques ou de latex de type polyuréthane, telles que celles décrites dans les brevets US 5,316,791 et EP 0680492.

Les compositions de primaire préférées sont les compositions à base de polyuréthanes et les compositions à base de latex, en particulier les latex de polyuréthane.

Les latex poly(méth)acryliques sont des latex de copolymères constitués principalement par un (méth)acrylate, tel que par exemple le (méth)acrylate d'éthyle, de butyle, de méthoxyéthyle ou d'éthoxyéthyle, avec une proportion généralement mineure d'au moins un autre co-monomère, tel que par exemple du styrène.

Les latex poly(méth)acryliques préférés sont les latex de copolymères acrylate-styrène. De tels latex de copolymères acrylate-styrène sont disponibles commercialement auprès de la Société ZENECA RESINS sous la dénomination NEOCRYL^{®}.

Les latex de polyuréthane sont également connus et disponibles dans le commerce. A titre d'exemple, on peut citer les latex de polyuréthane contenant des motifs polyesters. De tels latex sont également commercialisés par la société ZENECA RESINS sous la dénomination NEOREZ^{®} et par la société BAXENDEN CHEMICALS sous la dénomination WITCOBOND^{®}.

On peut également utiliser dans les compositions de primaire des mélanges de ces latex, en particulier de latex polyuréthane et de latex poly(méth)acrylique.

Ces compositions de primaire peuvent être déposées sur les faces de l'article par trempage ou centrifugation puis séchées à une température d'au moins 70 °C et pouvant aller jusqu'à 100 °C, de préférence de l'ordre de 90 °C, pendant une durée de 2 minutes à 2 heures, généralement de l'ordre de 15 minutes, pour former des couches de primaire ayant des épaisseurs, après cuisson, de 0,2 à 2,5 µm, de préférence de 0,5 à 1,5 µm.

Bien évidemment, l'article d'optique selon l'invention peut également comporter des revêtements formés sur le revêtement anti-reflets et capables de modifier leurs propriétés de surface, tels que des revêtements hydrophobes et/ou oléophobes (top coat anti-salissures). Ces revêtements sont de préférence déposés sur la couche externe du revêtement anti-reflets. Leur épaisseur est en général inférieure ou égale à 10 nm, de préférence de 1 à 10 nm, mieux de 1 à 5 nm.

Il s'agit généralement de revêtements de type fluorosilane ou fluorosilazane. Ils peuvent être obtenus par dépôt d'un fluorosilane ou fluorosilazane précurseur, comprenant de préférence au moins deux groupes hydrolysables par molécule. Les fluorosilanes précurseurs contiennent préférentiellement des groupements fluoropolyéthers et mieux des groupements perfluoropolyéthers. Ces fluorosilanes sont bien connus et sont décrits, entre autres, dans les brevets US 5,081,192, US 5,763,061, US 6,183, 872, US 5,739, 639, US 5,922,787, US 6,337,235, US 6,277,485 et EP 0933377.

Typiquement, un article d'optique selon l'invention comprend un substrat successivement revêtu d'une couche de primaire anti-chocs, d'une couche anti-abrasion et/ou anti-rayures, d'une sous-couche selon l'invention, d'un revêtement anti-reflets selon l'invention et d'un revêtement hydrophobe et/ou oléophobe. L'article selon l'invention est de préférence une lentille optique, mieux une lentille ophtalmique, ou une ébauche de lentille optique ou ophtalmique.

L'invention concerne également un procédé de fabrication d'un article d'optique à propriétés anti-reflets tel que décrit ci-dessus, dans lequel toutes les couches de la sous-couche puis toutes les couches du revêtement anti-reflets sont déposées par évaporation sous vide. Un tel procédé présente l'avantage d'éviter de chauffer le substrat, ce qui est particulièrement intéressant dans le cas des verres organiques.

Les exemples suivants illustrent l'invention de façon plus détaillée mais non limitative.

### EXEMPLES

### 1. Procédures générales

Les articles d'optique employés dans les exemples comprennent un substrat de lentille ORMA^{®} ESSILOR de 65 mm de diamètre, de puissance -2,00 dioptries et d'épaisseur 1,2 mm, revêtu du revêtement anti-abrasion et/ou anti-rayures (hard coat) divulgué dans l'exemple 3 du brevet EP 0614957 (d'indice de réfraction égal à 1,50), à base d'un hydrolysat de GLYMO et DMDES, de silice colloïdale et d'acétylacétonate d'aluminium. Ce revêtement anti-abrasion est obtenu par dépôt et durcissement d'une composition comprenant en masse, 224 parties de GLYMO, 80,5 parties de HCl 0,1 N, 120 parties de DMDES, 718 parties de silice colloïdale à 30 % massique dans le méthanol, 15 parties d'acétylacétonate d'aluminium et 44 parties d'éthylcellosolve. La composition comporte également 0,1 % de tensioactif FLUORAD™ FC-430^{®} de 3M en masse par rapport à la masse totale de la composition. Ce revêtement anti-abrasion est déposé directement sur le substrat.

Les sous-couches et les couches du revêtement anti-reflets ont été déposées sans chauffage des substrats par évaporation sous vide éventuellement assistée par faisceau ionique, lorsque précisé (source d'évaporation : canon à électrons).

Le mélange SiO₂/Al₂O₃ utilisé est le LIMA^{®} commercialisé par Umicore Materials AG comprenant 4 % en masse d'Al₂O₃ par rapport à la masse totale de SiO₂ + Al₂O₃ (exemples 1, 2, 3, 5), ou la substance L5^{®} commercialisée par Merck KGaA (exemple 4).

Le bâti de dépôt est une machine Leybold 1104 équipé d'un canon à ions ESV14 (8kV) pour l'évaporation des oxydes, d'un creuset à effet Joule pour le dépôt du top coat et d'un canon à ions (Commonwealth Mark II) pour la phase préliminaire de préparation de surface par des ions argon.

L'épaisseur des couches est contrôlée au moyen d'une balance à quartz.

### 2. Modes opératoires

### Exemples 1 à 7

Le procédé de dépôt comprend l'introduction de l'article dans une enceinte de dépôt sous vide, une étape de pompage, une étape de préparation de surface ionique par IPC (à une pression de 2.10⁻⁵ mBar), une étape de dépôt de la sous-couche BI anti-abrasion (SiO₂ ou SiO₂/Al₂O₃) avec une vitesse de 1 nm/s, le dépôt de la 1^{ère} couche HI (ZrO₂) avec une vitesse de 0,3 nm/s, le dépôt de la 1^{ère} couche BI (SiO₂ ou SiO₂/Al₂O₃) avec une vitesse de 0,7 nm/s, le dépôt de la 2^{nde} couche HI (TiO₂) à une pression de 1.10⁻⁴ mBar avec une vitesse de 0,3 à 0,5 nm/s et une assistance d'ions oxygène correspondant à 2,5 A - 120 V, le dépôt de la 3^{ème} couche HI (ZrO₂) avec une vitesse de 0,3 nm/s (sauf exemples 2, 5, 7), le dépôt d'une couche ITO avec une vitesse de 0,3 à 0,5 nm/s et une assistance d'ions oxygène correspondant à 2,5 A - 120 V (sauf exemples 3 et 6), le dépôt de la 2^{nde} couche BI (SiO₂ ou SiO₂/Al₂O₃) avec une vitesse de 1 nm/s, une étape de dépôt d'un revêtement anti-salissure (top coat) et une étape de ventilation.

### Exemple 8

Le procédé de dépôt comprend l'introduction de l'article dans une enceinte de dépôt sous vide, une étape de pompage, une étape de préparation de surface ionique par IPC (à une pression de 1.10⁻⁴ mBar), le dépôt de la 1^{ère} couche HI (ZrO₂) sous atmosphère de O₂ à une pression de 8.10⁻⁵ mBar et avec une vitesse de 0,3 nm/s, le dépôt de la 1^{ère} couche BI (SiO₂) avec une vitesse de 0,7 nm/s, le dépôt de la 2^{nde} couche HI (ZrO₂) régulé sous atmosphère de O₂ à une pression de 8.10⁻⁵ mBar avec une vitesse de 0,3 nm/s, le dépôt de la 2^{nde} couche BI (SiO₂) avec une vitesse de 1 nm/s, une étape de dépôt d'un revêtement anti-salissure (top coat) et une étape de ventilation.

### 3. Caractérisations

### a. Caractérisation de la résistance thermique : détermination de la température critique

Le verre organique ophtalmique revêtu d'un revêtement anti-reflets est placé pendant 1 heure dans une étuve thermostatée à une température T de 50°C, retiré de l'étuve puis l'aspect visuel de l'article est évalué en réflexion sous une lampe de bureau. Si le revêtement anti-reflets apparaît intact, le verre organique ophtalmique est replacé dans l'étuve pendant 1 heure à la température T + 5 °C. Dès que le revêtement anti-reflets apparaît craquelé, le test est arrêté. La température critique correspond à la température d'apparition des craquelures.

Lorsque plusieurs verres sont testés, la température d'apparition des craquelures mentionnée est la moyenne des résultats.

### b. Caractérisation de la résistance à l'abrasion

La résistance à l'abrasion a été évaluée par détermination de la valeur BAYER sur les substrats revêtus d'une sous-couche (sauf l'exemple 8) et d'un revêtement anti-reflets.

### Test BAYER ASTM (Bayer sable)

La détermination de cette valeur BAYER a été établie conformément à la norme ASTM F 735.81. Plus la valeur obtenue au test BAYER est élevée, plus la résistance à l'abrasion est élevée.

Ce test consiste à agiter simultanément un verre échantillon et un verre étalon d'un mouvement alternatif déterminé dans un bac contenant une poudre abrasive (sable) de granulométrie définie à une fréquence de 100 cycles/minute pendant 2 minutes. La mesure de diffusion H "avant / après" du verre échantillon est comparée à celle d'un verre étalon, en l'occurrence un verre nu à base de CR-39^{®}, pour lequel la valeur BAYER est fixée à 1.

La valeur de Bayer est R= H étalon/H verre échantillon.

### Test Bayer ISTM

La détermination de cette valeur BAYER a été établie en suivant la norme ASTM F735-81, avec les modifications suivantes :
L'abrasion s'effectue sur 300 cycles en utilisant approximativement 500 g d'alumine (oxyde d'aluminium Al₂O₃) ZF 152412 fournie par la société Ceramic Grains (anciennement Norton Materials, New Bond Street, PO Box 15137 Worcester, Mass. 01615-00137). La diffusion est mesurée en utilisant un appareil Hazemeter modèle XL-211.

La valeur de Bayer ASTM (Bayer sable) est qualifiée de bonne lorsque R est supérieur ou égal à 3,4 et inférieur à 4,5.

La valeur de Bayer ISTM est qualifiée de bonne lorsque R est supérieur ou égal à 3 et inférieur à 4,5.

La valeur de Bayer Sable ou ISTM est qualifiée d'excellente pour des valeurs de 4,5 et plus.

### 4. Résultats

Les empilements obtenus selon les exemples 1 à 8 sont détaillés en page 26 ci-après. Les résultats des mesures de températures critiques (TC, en °C) et de résistance à l'abrasion sont regroupés dans le tableau 1.

**Tableau 1**

| Exemple | TC (24 h) en °C | Test Bayer ASTM (BAYER SABLE) | Test Bayer ISTM |
|---|---|---|---|
| 1 (invention) | 85 | 4,7 | 11 |
| 2 (invention) | 93 | 4,3 | 8,7 |
| 3 (comparatif) | 93 | 2,9 | |
| 4 (invention) | 88 | 4,8 | 13 |
| 5 (comparatif) | 96 | 3,8 | 5,6 |
| 6 (comparatif) | 70 | 3,8 | |
| 7(comparatif) | 83 | 4,3 | 8,5 |
| 8 (comparatif) | 70 | 5,0 | 8,5 |

La lentille de l'exemple 8 (revêtement anti-reflets tétracouche classique) possède une très bonne résistance à l'abrasion, mais sa température critique n'est que de 70 °C.

Les lentilles des exemples 1, 2 et 4 correspondant à l'invention possèdent à la fois une résistance à l'abrasion et une température critique élevées. L'exemple 4 fournit le meilleur compromis entre ces deux propriétés. Une comparaison des exemples 1 et 2 révèle que l'utilisation de deux couches HI TiO₂/ZrO₂ juxtaposées plutôt qu'une simple couche de TiO₂ améliore la résistance à l'abrasion en ne diminuant que faiblement la température critique. D'autre part, le fait d'intercaler une couche de ZrO₂ entre une couche de TiO₂ et une couche ITO permet de réduire la diffusion par rapport à un article dans lequel une couche ITO et une couche de TiO₂ sont juxtaposées.

Les lentilles des exemples 3 et 5 ont une bonne résistance thermique grâce à la présence de SiO₂/Al₂O₃ dans les couches BI et la sous-couche, mais une faible résistance à l'abrasion, particulièrement celle de l'exemple 3. De façon surprenante, on constate qu'il n'est pas avantageux d'employer une sous-couche comprenant un mélange de SiO₂ et d'Al₂O₃ (une comparaison directe est possible entre les exemples 2 et 5). Sans vouloir être lié par une quelconque théorie, les inventeurs pensent que l'augmentation de la contrainte globale de l'empilement en compression, apportée par la substitution de la silice par de la silice dopée en alumine, devient en effet trop importante, si bien que l'adhérence de l'empilement des couches est affaiblie et la réponse aux tests d'abrasion est moindre.

Les lentilles des exemples 6 et 7, dont les couches BI du revêtement anti-reflets sont faites de SiO₂, ont une température critique relativement faible. Une comparaison des exemples 2 et 7 montre que le remplacement des deux couches BI de SiO₂ par deux couches BI de SiO₂/Al₂O₃, toutes choses étant égales par ailleurs, n'a pas d'influence sur la résistance à l'abrasion mais augmente la température critique de façon conséquente (+ 10 °C).

Il a été vérifié grâce à un spectrophotomètre, tel que le lambda 900 de Perkin Elmer, que le facteur relatif de transmission dans le visible Tv des articles selon l'invention, calculé entre 380 et 780 nm, était supérieur à 90 %.

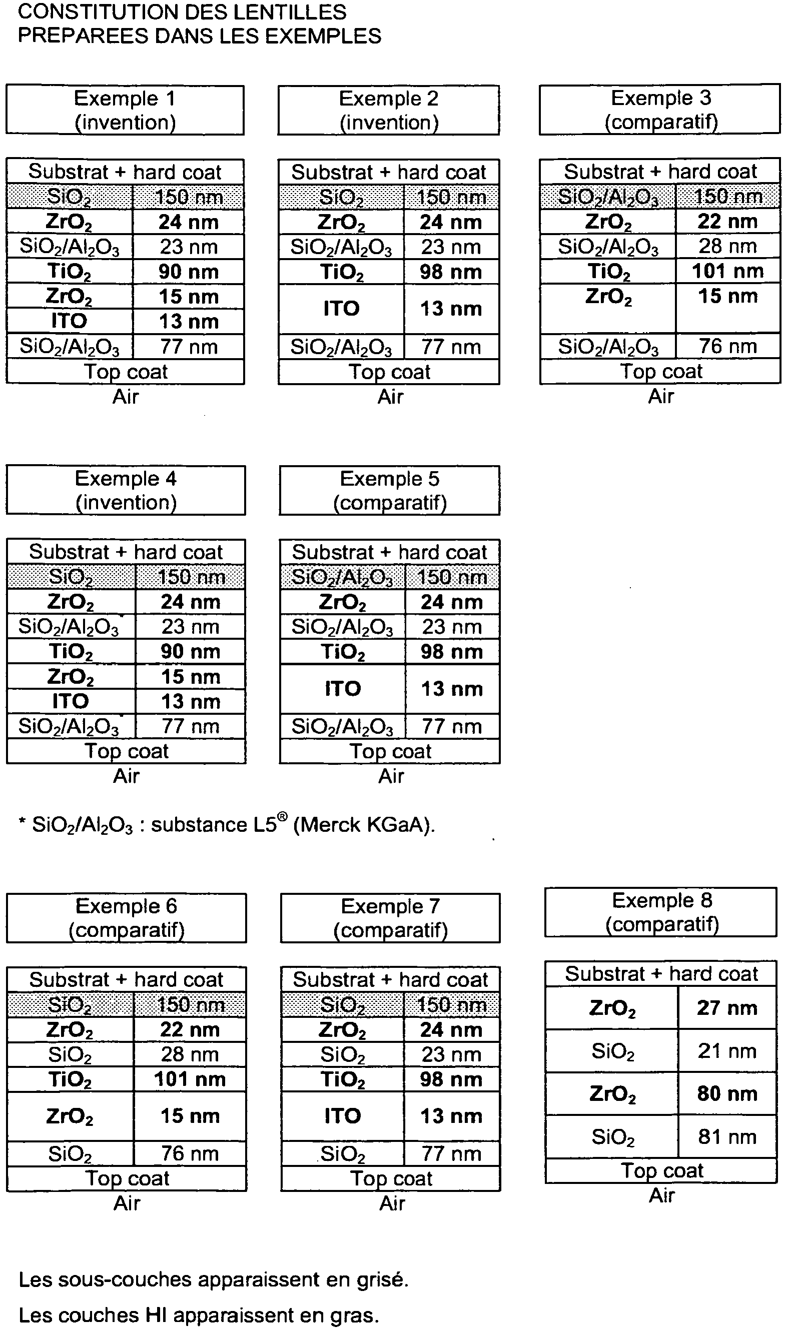

## Revendications

1. Article d'optique à propriétés anti-reflets, comprenant un substrat et, en partant du substrat :
- une sous-couche comprenant une couche à base de SiO₂, ladite couche à base de SiO₂ ayant une épaisseur supérieure ou égale à 75 nm et étant exempte d'Al₂O₃ ; et
- un revêtement anti-reflets multicouches comprenant un empilement d'au moins une couche de haut indice de réfraction et d'au moins une couche de bas indice de réfraction,
**caractérisé en ce que** toutes les couches de bas indice de réfraction du revêtement anti-reflets comprennent un mélange de SiO₂ et d'Al₂O₃, et **en ce que** les couches de haut indice de réfraction du revêtement anti-reflets ne sont pas des couches absorbant dans le visible comprenant un oxyde de titane sous-stoechiométrique et réduisant le facteur relatif de transmission dans le visible (Tv) de l'article d'optique d'au moins 10 % par rapport au même article ne comportant pas lesdites couches absorbant dans le visible.

2. Article selon la revendication 1, **caractérisé en ce que** son facteur relatif de transmission dans le visible (Tv) est supérieur à 90 %.

3. Article selon l'une quelconque des revendications précédentes, **caractérisé en ce que** son facteur moyen de réflexion par face de l'article dans le domaine visible (Rₘ) est inférieur à 2,5 %, mieux inférieur à 2 % et encore mieux inférieur à 1 %.

4. Article selon l'une quelconque des revendications précédentes, **caractérisé en ce que** sa température critique est supérieure ou égale à 80 °C, mieux supérieure ou égale à 85 °C et encore mieux supérieure ou égale à 90 °C.

5. Article selon l'une quelconque des revendications précédentes, **caractérisé en ce que** ladite couche à base de SiO₂ exempte d'Al₂O₃ a une épaisseur supérieure ou égale à 80 nm, de préférence supérieure ou égale à 100 nm, mieux supérieure ou égale à 120 nm.

6. Article selon l'une quelconque des revendications précédentes, **caractérisé en ce que** toutes les couches de bas indice de réfraction du revêtement anti-reflets comprennent de 1 à 10 %, préférentiellement de 1 à 5 % en masse d'Al₂O₃ par rapport à la masse totale de SiO₂ + Al₂O₃ dans ces couches.

7. Article selon l'une quelconque des revendications précédentes, **caractérisé en ce que** les couches de haut indice de réfraction du revêtement anti-reflets comprennent au moins un matériau choisi parmi TiO₂, PrTiO₃, ZrO₂ et leurs mélanges.

8. Article selon l'une quelconque des revendications précédentes, **caractérisé en ce qu'**au moins une couche de haut indice de réfraction du revêtement anti-reflets est une couche à base de TiO₂.

9. Article selon la revendication 8, **caractérisé en ce que** la couche à base de TiO₂ a été déposée sous assistance ionique.

10. Article selon l'une quelconque des revendications précédentes, **caractérisé en ce que** le revêtement anti-reflets comprend une couche de TiO₂ et une couche de ZrO₂ déposées l'une sur l'autre.

11. Article selon l'une quelconque des revendications précédentes, **caractérisé en ce que** le revêtement anti-reflets comprend au moins une couche électriquement conductrice.

12. Article selon la revendication 11, **caractérisé en ce que** l'épaisseur de la couche électriquement conductrice varie de 0,1 à 30 nm, mieux de 1 à 20 nm et encore mieux de 1 à 10 nm.

13. Article selon la revendication 11 ou 12, **caractérisé en ce que** l'oxyde métallique est l'oxyde d'étain-indium.

14. Article selon l'une quelconque des revendications 11 à 13, **caractérisé en ce que** la couche électriquement conductrice a été déposée sous assistance ionique.

15. Article selon l'une quelconque des revendications précédentes, **caractérisé en ce que** le revêtement anti-reflets comprend un empilement TiO₂ / ZrO₂ / couche électriquement conductrice.

16. Article selon l'une quelconque des revendications précédentes, **caractérisé en ce qu'**il comprend, en partant du substrat, une sous-couche de SiO₂ d'épaisseur supérieure ou égale à 75 nm, une couche de ZrO₂ de 10 à 40 nm d'épaisseur, une couche de SiO₂/Al₂O₃ de 10 à 40 nm d'épaisseur, une couche de TiO₂ de 40 à 150 nm d'épaisseur, une couche de ZrO₂ de 10 à 30 nm d'épaisseur, une couche électriquement conductrice de 0,1 à 30 nm d'épaisseur et une couche de SiO₂/Al₂O₃ de 40 à 150 nm d'épaisseur.

17. Article selon l'une quelconque des revendications précédentes, **caractérisé en ce que** le substrat est un verre organique ayant un coefficient de dilatation thermique de 50.10⁻⁶ °C⁻¹ à 180.10⁻⁶ °C⁻¹, et préférentiellement de 100.10⁻⁶ °C⁻¹ à 180.10⁻⁶ °C⁻¹.

18. Article selon l'une quelconque des revendications précédentes, **caractérisé en ce qu'**il est une lentille optique.

## Patentansprüche

1. Optischer Artikel mit Antireflexeigenschaften, umfassend ein Substrat und, ausgehend von dem Substrat:
- eine Unterschicht, umfassend eine Schicht auf Basis von SiO₂, wobei die Schicht auf Basis von SiO₂ eine Dicke größer gleich 75 nm aufweist und frei von Al₂O₃ ist; und
- eine mehrschichtige Antireflexbeschichtung, umfassend einen Stapel von mindestens einer Schicht mit hohem Brechungsindex und mindestens einer Schicht mit niedrigem Brechungsindex, **dadurch gekennzeichnet, dass** alle Schichten mit niedrigem Brechungsindex der Antireflexbeschichtung eine Mischung von SiO₂ und Al₂O₃ umfassen und dass die Schichten mit hohem Brechungsindex der Antireflexbeschichtung keine im Sichtbaren absorbierenden Schichten sind, die ein unterstöchiometrisches Titanoxid umfassen und den relativen Transmissionsfaktor im Sichtbaren (Tv) des optischen Artikels um mindestens 10% gegenüber dem gleichen Artikel ohne die im Sichtbaren absorbierenden Schichten verringern.

2. Artikel nach Anspruch 1, **dadurch gekennzeichnet, dass** sein relativer Transmissionsfaktor im Sichtbaren (Tv) größer als 90% ist.

3. Artikel nach einem der vorhergehenden Ansprüche, **dadurch gekennzeichnet, dass** sein mittlerer Reflexionsfaktor pro Seite des Artikels im Sichtbaren (Rₘ) weniger als 2,5%, besser weniger als 2% und noch besser weniger als 1% beträgt.

4. Artikel nach einem der vorhergehenden Ansprüche, **dadurch gekennzeichnet, dass** seine kritische Temperatur größer gleich 80°C, besser größer gleich 85°C und noch besser größer gleich 90°C ist.

5. Artikel nach einem der vorhergehenden Ansprüche, **dadurch gekennzeichnet, dass** die Schicht auf Basis von SiO₂, die frei von Al₂O₃ ist, eine Dicke größer gleich 80 nm, vorzugsweise größer gleich 100 nm, besser größer gleich 120 nm, aufweist.

6. Artikel nach einem der vorhergehenden Ansprüche, **dadurch gekennzeichnet, dass** alle Schichten mit niedrigem Brechungsindex der Antireflexbeschichtung 1 bis 10 Gew.-%, vorugsweise 1 bis 5 Gew.-%, Al₂O₃, bezogen auf das Gesamtgewicht von SiO₂ + Al₂O₃ in diesen Schichten umfassen.

7. Artikel nach einem der vorhergehenden Ansprüche, **dadurch gekennzeichnet, dass** die Schichten mit hohem Brechungsindex der Antireflexbeschichtung mindestens ein Material, das aus TiO₂, PrTiO₃, ZrO₂ und Mischungen davon ausgewählt ist, umfasst.

8. Artikel nach einem der vorhergehenden Ansprüche, **dadurch gekennzeichnet, dass** es sich bei mindestens einer Schicht mit hohem Brechungsindex der Antireflexbeschichtung um eine Schicht auf Basis von TiO₂ handelt.

9. Artikel nach Anspruch 8, **dadurch gekennzeichnet, dass** die Schicht auf Basis von TiO₂ unter Ionenunterstützung abgeschieden worden ist.

10. Artikel nach einem der vorhergehenden Ansprüche, **dadurch gekennzeichnet, dass** die Antireflexbeschichtung eine TiO₂-Schicht und eine ZrO₂-Schicht, die aufeinander abgeschieden sind, umfasst.

11. Artikel nach einem der vorhergehenden Ansprüche, **dadurch gekennzeichnet, dass** die Antireflexbeschichtung mindestens eine elektrisch leitfähige Schicht umfasst.

12. Artikel nach Anspruch 11, **dadurch gekennzeichnet, dass** die Dicke der elektrisch leitfähigen Schicht von 0,1 bis 30 nm, besser 1 bis 20 nm und noch besser 1 bis 10 nm variiert.

13. Artikel nach Anspruch 11 oder 12, **dadurch gekennzeichnet, dass** es sich bei dem Metalloxid um Indiumzinnoxid handelt.

14. Artikel nach einem der Ansprüche 11 bis 13, **dadurch gekennzeichnet, dass** die elektrisch leitfähige Schicht unter Ionenunterstützung abgeschieden worden ist.

15. Artikel nach einem der vorhergehenden Ansprüche, **dadurch gekennzeichnet, dass** die Antireflexbeschichtung einen Stapel TiO₂ / ZrO₂ / elektrisch leitfähige Schicht umfasst.

16. Artikel nach einem der vorhergehenden Ansprüche, **dadurch gekennzeichnet, dass** er, ausgehend von dem Substrat, eine Unterschicht aus SiO₂ mit einer Dicke größer gleich 75 nm, eine Schicht aus ZrO₂ mit einer Dicke von 10 bis 40 nm, eine Schicht aus SiO₂/Al₂O₃ mit einer Dicke von 10 bis 40 nm, eine Schicht aus TiO₂ mit einer Dicke von 40 bis 150 nm, eine Schicht aus ZrO₂ mit einer Dicke von 10 bis 30 nm, eine elektrisch leitfähige Schicht mit einer Dicke von 0,1 bis 30 nm und eine Schicht aus SiO₂/Al₂O₃ mit einer Dicke von 40 bis 150 nm umfasst.

17. Artikel nach einem der vorhergehenden Ansprüche, **dadurch gekennzeichnet, dass** es sich bei dem Substrat um ein organisches Glas mit einem Wärmeausdehnungskoeffizienten von 50.10⁻⁶°C⁻¹ bis 180.10⁻⁶°C⁻¹ und vorzugsweise 100.10⁻⁶°C⁻¹ bis 180.10⁻⁶°C⁻¹ handelt.

18. Artikel nach einem der vorhergehenden Ansprüche, **dadurch gekennzeichnet, dass** es sich um eine optische Linse handelt.

## Claims

1. An optical article having antireflection properties, which comprises a substrate and, starting from the substrate:
- a sub-layer comprising a SiO₂-based layer, said SiO₂-based layer having a thickness greater than or equal to 75 nm and being free from Al₂O₃ ; and
- a multilayered antireflection coating comprising a stack consisting in at least one high refractive index layer and at least one low refractive index layer,
wherein all the low refractive index layers of the antireflection coating do comprise a mixture of SiO₂ and Al₂O₃, and the high refractive index layers of the antireflection coating are not layers that do absorb in the visible region comprising a substoichiometric titanium oxide and reducing the relative visible light transmission factor (Tv) of the optical article by at least 10% as compared to a same article without any of said visible light absorbing layers.

2. An article according to claim 1, wherein the relative visible light transmission factor (Tv) is higher than 90%.

3. An article according to any one of the preceding claims, wherein the mean reflection factor per article face in the visible region (Rm) is lower than 2.5%, more preferably is lower than 2% and even more preferably is lower than 1%.

4. An article according to any one of the preceding claims, wherein the critical temperature is greater than or equal to 80°C, more preferably greater than or equal to 85°C, and most preferably greater than or equal to 90°C.

5. An article according to any one of the preceding claims, wherein said SiO₂-based layer that is free from Al₂O₃ has a thickness which is greater than or equal to 80 nm, preferably greater than or equal to 100 nm and more preferably greater than or equal to 120 nm.

6. An article according to any one of the preceding claims, wherein all the low refractive index layers of the antireflection coating comprise from 1 to 10%, preferably from 1 to 5% by weight of Al₂O₃ as compared to the total weight of SiO₂+ Al₂O₃ in these layers.

7. An article according to any one of the preceding claims, wherein the high refractive index layers of the antireflection coating comprise at least one material selected from TiO₂, PrTiO₃, ZrO₂ and mixtures thereof.

8. An article according to any one of the preceding claims, wherein at least one high refractive index layer of the antireflection coating is a TiO₂-based layer.

9. An article according to claim 8, wherein the TiO₂-based layer has been deposited with ion assistance.

10. An article according to any one of the preceding claims, wherein the antireflection coating comprises a TiO₂-based layer and a ZrO₂-based layer deposited onto each other.

11. An article according to any one of the preceding claims, wherein the antireflection coating comprises at least one electrically conductive layer.

12. An article according to claim 11, wherein the thickness of the electrically conductive layer does vary from 0.1 to 30 nm, more preferably from 1 to 20 nm and even more preferably from 1 to 10 nm.

13. An article according to claim 11 or 12, wherein the metal oxide is indiumtin oxide.

14. An article according to any one of claims 11 to 13, wherein the electrically conductive layer has been deposited with ion assistance.

15. An article according to any one of the preceding claims, wherein the antireflection coating comprises a TiO₂/ZrO₂/electrically conductive layer stack.

16. An article according to any one of the preceding claims, comprising, starting from the substrate a SiO₂ sub-layer with a thickness greater than or equal to 75 nm, a ZrO₂ layer with a thickness ranging from 10 to 40 nm, a SiO₂/Al₂O₃ layer with a thickness ranging from 10 to 40 nm, a TiO₂ layer with a thickness ranging from 40 to 150 nm, a ZrO₂ layer with a thickness ranging from 10 to 30 nm, an electrically conductive layer with a thickness ranging from 0.1 to 30 nm and a SiO₂/Al₂O₃ layer with a thickness ranging from 40 to 150 nm.

17. An article according to any one of the preceding claims, wherein the substrate is an organic glass which thermal expansion coefficient does range from 50.10⁻⁶ °C⁻¹ to 180.10⁻⁶ °C⁻¹, and preferably from 100.10⁻⁶ °C⁻¹ to 180.10⁻⁶ °C⁻¹.

18. An article according to any one of the preceding claims, wherein said article is an optical lens.
